# EUROPÄISCHE PATENTSCHRIFT

(11) **EP 3 458 732 B1**
(45) Veröffentlichungstag und Bekanntmachung des Hinweises auf die Patenterteilung: **12.08.2020**
(21) Anmeldenummer: 17723994.4
(22) Anmeldetag: 16.05.2017
(51) Int. Cl.: F16B 47/00

(54) **VORRICHTUNG ZUR FIXIERUNG EINES BEFESTIGUNGSANKERS**
DEVICE FOR FIXING A SECURING ANCHOR
DISPOSITIF PERMETTANT DE FIXER UNE ANCRE DE FIXATION

(30) Priorität: 17.05.2016 DE 202016102614 U
(43) Veröffentlichungstag der Anmeldung: 27.03.2019
(73) Patentinhaber: Zentrale Autoglas GmbH, 49324 Melle (DE)
(72) Erfinder: RIESEN, Heinrich, 49324 Melle (DE)
(74) Vertreter: Ter Meer Steinmeister & Partner
(86) Internationale Anmeldenummer: PCT/EP2017/061687
(87) Internationale Veröffentlichungsnummer: WO 2017/198646

(56) Entgegenhaltungen:
- EP-A1- 2 878 836
- WO-A1-2008/075895
- CN-U- 201 759 311
- DE-A1- 4 241 670
- DE-A1- 10 107 780
- JP-A- 2010 187 803
- US-B1- 6 637 707

## Beschreibung

Die Erfindung betrifft eine Vorrichtung zur lösbaren Fixierung eines Befestigungsankers an einer glatten Wandfläche, mit einer Saugglocke, die dazu ausgebildet ist, durch Unterdruck an der Wandfläche gehalten zu werden und die einen Halter für den Befestigungsanker bildet, wobei die Saugglocke zwei Stege aufweist, zwischen denen ein Hebel zum Spannen eines Saugnapfes gelagert ist, und der Halter einen Sitz aufweist, der dazu konfiguriert ist, eine Basisplatte des Befestigungsankers an ihrem Rand allseitig zu umschließen, und ein beweglich an dem Halter angeordneter Riegel zwischen einer Freigabestellung, in der er das Einsetzen der Basisplatte in den Sitz erlaubt, und einer Verriegelungsstellung bewegbar ist, in der er die Basisplatte übergreift.

Eine Vorrichtung dieser Art ist aus WO 2008/075859 A1 bekannt.

Aus US 6 059 010 A ist eine Vorrichtung bekannt, die dazu dient, einen Dachgepäckträger auf einem Dach eines Pkw zu befestigen.

Aufgabe der Erfindung ist es, eine Befestigungsvorrichtung zu schaffen, die sich vielseitiger einsetzen lässt und bei der der Halter kompakt in die Saugglocke integriert ist.

Diese Aufgabe wird erfindungsgemäß dadurch gelöst, dass der Halter in einem Stück mit der Saugglocke ausgebildet ist und dass Teile des Sitzes durch Verlängerungen der Stege gebildet werden.

Da die Basisplatte in der Verriegelungsstellung von dem Riegel übergriffen wird, kann sie nicht in der Richtung senkrecht zur Ebene der Basisplatte aus dem Sitz herausgezogen werden. Da andererseits der Sitz die Basisplatte allseitig umschließt, kann die Basisplatte auch nicht in irgendeiner Richtung in ihrer Ebene relativ zu dem Halter bewegt werden, so dass eine sichere Fixierung des Befestigungsankers an dem Halter gewährleistet ist. Der Sitz braucht dabei die Basisplatte nicht lückenlos zu umschließen. Es genügt, wenn der Sitz eine Bewegung der Basisplatte relativ zum Halter in jeder Richtung parallel zur Ebene der Basisplatte verhindert.

Die erfindungsgemäße Vorrichtung eignet sich beispielsweise zur Befestigung einer Markisenstange an einem Wohnmobil. Es sind Markisenstangen bekannt, die an einem Ende einen Befestigungsanker mit einer gelenkig an der Markisenstange gehaltenen rechteckigen Basisplatte aufweisen. Ebenso sind Halte- und Verriegelungseinrichtungen zur lösbaren Aufnahme und Verriegelung der Basisplatte bekannt. Die bekannten Halte- und Verriegelungseinrichtungen weisen einen Sitz auf, der mit Schrauben an der Wandfläche befestigt werden kann. Bei Kraftfahrzeugen oder Wohnmobilen würde dies jedoch bedeuten, dass Schraubenlöcher in das Karosserieblech gebohrt werden müssten. Die Erfindung erlaubt es dagegen, den Befestigungsanker sicher zu fixieren, ohne dass das Karosserieblech durch Schraubenlöcher oder ähnliche Befestigungseinrichtungen unumkehrbar verändert werden muss, und ohne dass die zumeist die lackierte Oberfläche der Karosserie in sonstiger Weise beschädigt wird.

Vorteilhafte Ausgestaltungen und Anwendungen der Erfindung sind in den Unteransprüchen angegeben.

Der Riegel kann, wie es an sich bekannt ist, durch einen Schieber gebildet werden, der in einer Richtung parallel zur Ebene des Sitzes für die Basisplatte verschiebbar an dem Halter geführt ist.

Der Riegel kann jedoch beispielsweise auch durch einen Knebel gebildet werden, der zwischen der Freigabestellung und der Verriegelungsstellung schwenkbar ist. Weiterhin kann der Riegel auch die Form eines Exzenters haben, der um eine parallel zur Ebene des Sitzes verlaufende Achse drehbar ist und der so angeordnet ist, dass die Basisplatte mit einem Ende unter den Exzenter geschoben werden kann. Durch Drehen des Exzenters gelangt der Riegel dann in seine Verriegelungsstellung, in der er die Basisplatte festspannt und selbsthemmend in Position gehalten wird.

In einer weiteren Ausführungsform ist es auch möglich, dass der Riegel durch schwenkbare oder verschiebbare Klauen gebildet wird, die am Rand des Sitzes angeordnet und elastisch in ihre Verriegelungsstellung vorgespannt sind.

Gegenstand der Erfindung ist auch ein Bausatz mit mindestens einer Befestigungsvorrichtung der oben beschriebenen Art und einem lösbar daran zu befestigenden Bauteil.

Im folgenden werden Ausführungsbeispiele anhand der Zeichnung näher erläutert.

Es zeigen:
- Fig. 1: einen Befestigungsanker einer Markisenstange, der mit einer im Schnitt dargestellten Befestigungsvorrichtung gemäß der Erfindung an einer glatten Wandfläche fixiert ist;
- Fig. 2: einen Längsschnitt durch einen zu der Befestigungsvorrichtung gehörenden Riegel;
- Fig. 3: den Riegel in einer Ansicht von rechts in Fig. 2;
- Fig. 4: eine Seitenansicht eines zu der Befestigungsvorrichtung gehörenden Halters für die Basisplatte;
- Fig. 5: einen Schnitt durch den Halter längs der Linie V-V in Fig. 4;
- Fig. 6: eine Darstellung der Befestigungsvorrichtung analog zu Fig. 1, jedoch in einem Zustand vor der Fixierung des Befestigungsankers;
- Fig. 7 und 8: weitere Stadien des Ablaufes während der Fixierung des Befestigungsankers;
- Fig. 9 - 11: einen Bausatz mit einer Befestigungsvorrichtung und einem daran befestigten Kleiderhaken;
- Fig. 12: eine Befestigungsvorrichtung in Kombination mit einem Wandhalter für ein Bildschirmgerät; und
- Fig. 13: eine Kombination aus zwei Befestigungsvorrichtungen und einem Wäschetrockner.

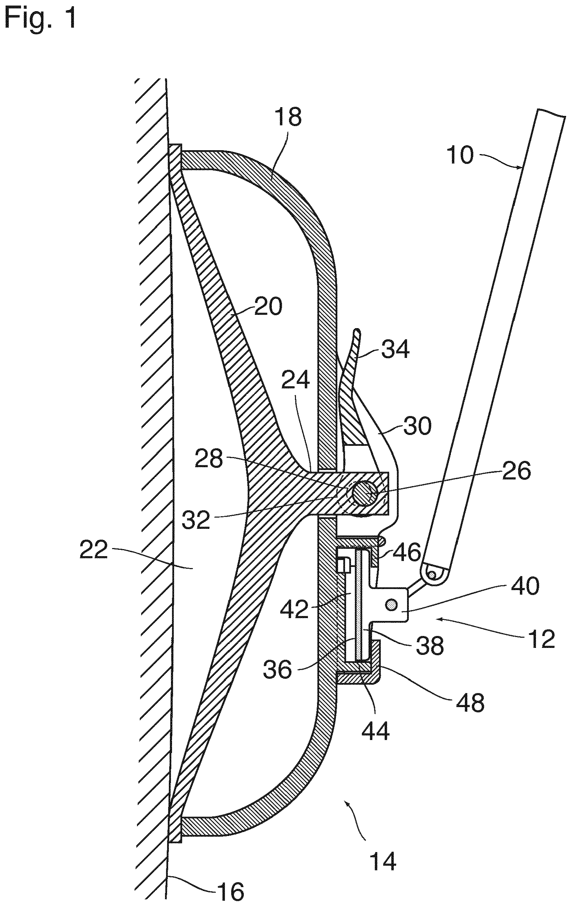

In Fig. 1 ist ein Ende einer Markisenstange 10 gezeigt, an der am Ende ein Befestigungsanker 12 gelenkig angeordnet ist. Eine Befestigungsvorrichtung 14 dient dazu, den Befestigungsanker 12 lösbar an einer glatten Wandfläche 16 zu fixieren, beispielsweise an der Seitenwand der Karosserie eines Wohnmobils.

Die Befestigungsvorrichtung 14 weist eine beispielsweise aus steifem Kunststoff gespritzte Saugglocke 18 auf, die durch Unterdruck an der Wandfläche 16 gehalten wird. Zu diesem Zweck nimmt die Saugglocke 18 einen Saugnapf 20 aus gummielastischem Material auf, der mit der Wandfläche 16 einen Hohlraum 22 bildet und dessen Rand sandwichartig zwischen der Wandfläche 16 und dem Rand der Saugglocke 18 gehalten ist. In der Mitte weist die Saugglocke 20 einen Zuganker 24 auf, der eine Öffnung der Saugglocke 18 durchgreift und außerhalb der Saugglocke 18 von einem Bolzen 26 durchsetzt wird. Der Bolzen 26 ist mit seinen entgegengesetzten Enden in Langlöchern 28 zweier Stege 30 gelagert, die an die Außenseite der Saugglocke 18 angeformt sind. Zwischen den beiden Stegen 30 ist außerdem ein Exzenter 32 angeordnet, der drehbar auf dem Bolzen 26 gelagert ist und von dem ein Hebel 34 ausgeht.

In dem in Fig. 1 gezeigten Zustand stützt sich der Exzenter 32 an der Außenfläche der Saugglocke 18 ab und hält dadurch den Zuganker 24 und den Saugnapf 20 in einer Position, in der das Volumen des Hohlraums 22 vergrößert ist und somit der Saugnapf 20 und damit auch die Saugglocke 18 durch Unterdruck an der Wandfläche 16 gehalten wird.

Der Befestigungsanker 12 hat eine rechteckige Basisplatte 36, die in Fig. 1 im Längsschnitt gezeigt ist und die an den Längsrändern durch U-förmig abgewinkelte Schenkel 38 versteift ist. Die Schenkel 38 sind in der Mitte zu Laschen 40 verlängert, mit denen der Befestigungsanker gelenkig an der Markisenstange 10 gehalten ist.

In dem in Fig. 1 gezeigten Zustand ist die Basisplatte 36 in einem Halter 42 aufgenommen, der in einem Stück mit der Saugglocke 18 ausgebildet ist und einen die Basisplatte 36 an ihrem Rand allseitig umschließenden Sitz 44 bildet. Ein in Fig. 1 oberer Rand der Basisplatte 36 greift dabei unter einen von dem Sitz 44 vorspringenden Flansch 46.

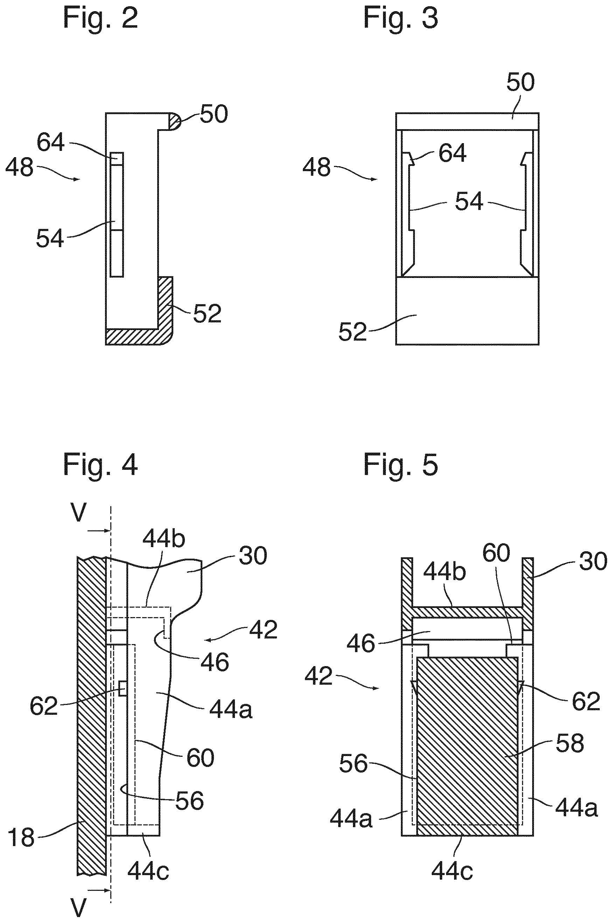

Der in Fig. 1 untere Rand der Basisplatte 36 wird von einem Riegel 48 übergriffen, der verschiebbar an dem Halter 42 geführt ist, wie weiter unten anhand der Fig. 2 bis 5 näher erläutert werden wird.

Auf die Markisenstange 10 wirken in der Gebrauchsstellung vorwiegend vertikale Kräfte, die die Tendenz haben, die Markisenstange und damit auch den Befestigungsanker 12 nach unten zu drücken. Diese Kräfte werden jedoch dadurch aufgenommen, dass sich die Basisplatte 36 des Befestigungsankers mit ihrem unteren Rand auf dem Rand des Sitzes 44 abstützt. Auf diese Weise werden die Kräfte auf die Saugglocke 18 übertragen, die ihrerseits fest an der Wandfläche 16 gehalten ist.

Wenn auf den Befestigungsanker 12 irgendwelche Kräfte wirken, die die Tendenz haben, die Basisplatte in der Richtung parallel zu dem Sitz 42 zu verschieben, beispielsweise nach oben oder senkrecht zur Zeichenebene in Fig. 1, so werden diese Kräfte ebenfalls durch den Sitz 44 aufgenommen. Weiterhin wird die Basisplatte 36 durch den Sitz 42 so abgestützt, dass sie sich auch nicht nach links in Fig. 1, also in Richtung auf die Wandfläche 16 bewegen kann.

Wenn hingegen auf den Befestigungsanker 12 Zugkräfte wirken, die die Tendenz haben, ihn nach rechts in Fig. 1 aus dem Sitz 42 herauszureißen, so werden diese Kräfte von dem Flansch 46 und dem Riegel 48 aufgenommen. Der Befestigungsanker 12 ist somit in jeder Richtung sicher an der Saugglocke 18 und damit an der Wandfläche 16 fixiert.

In Fig. 2 und 3 ist der Riegel 48 in einem vertikalen Schnitt und in einer Frontansicht (von rechts in Fig. 1 und 2) gezeigt. Der Riegel weist insgesamt die Form eines rechteckigen Rahmens auf, der den Sitz 44 des Halters 42 umschließt, jedoch am oberen Ende offen ist. Die beiden Schenkel des Rahmens sind dort lediglich durch einen außerhalb des Sitzes 44 verlaufenden Bügel 50 verbunden. Im Bereich des unteren Randes weist der Riegel einen Flansch 52 auf, mit dem er in der in Fig. 1 gezeigten Stellung die Basisplatte 36 übergreift. An den längeren Schenkeln des Rahmens sind innenseitig Führungsleisten 54 angeordnet, mit denen der Riegel 48 verschiebbar an dem Halter 42 geführt ist.

Fig. 4 zeigt den Halter 42 in einer Seitenansicht. Lediglich die Wand der Saugglocke 18 ist hier im Schnitt dargestellt. Unmittelbar angrenzend an diese Wand der Saugglocke bildet der Halter 42 Führungsnuten 56 für die Führungsleisten 54 des Riegels 48. Zwischen diesen Führungsnuten bildet der Halter 42 einen vom Rand der Saugglocke 18 vorspringenden Mittelteil 58, der in Fig. 5 im Schnitt dargestellt ist. Auf der von der Saugglocke 18 abgewandten Seite werden die Führungsnuten 56 durch Leisten 60 begrenzt, die weiter nach außen vorspringen und in einer zu dem Mittelteil 58 versetzten Ebene liegen. Diese Leisten 60 bilden ein Auflager für die Basisplatte 36 und tragen außerdem Teile des Sitzes 44, nämlich Seitenwände 44a, die in Verlängerung der Stege 30 verlaufen. Diese Seitenwände 44a sind durch eine obere Wand 44b und eine untere Wand 44c des Sitzes 44 verbunden.

Am Grund der Führungsnuten 56 sind Nocken 62 gebildet, hinter denen Rastnasen 64 (Fig. 2 und 3) der Führungsleisten 54 einrasten, wenn der Riegel 48 an dem Halter 42 montiert wird. Zugleich dienen diese Nocken 62 dazu, zusammen mit den Rastnasen 64 den Verschiebeweg des Riegels 48 an dem Halter 42 zu begrenzen. In der entgegengesetzten Richtung wird die Bewegung dadurch begrenzt, dass der untere Rahmenschenkel des Riegels 48 an der unteren Wand 44c des Sitzes 44 anstößt.

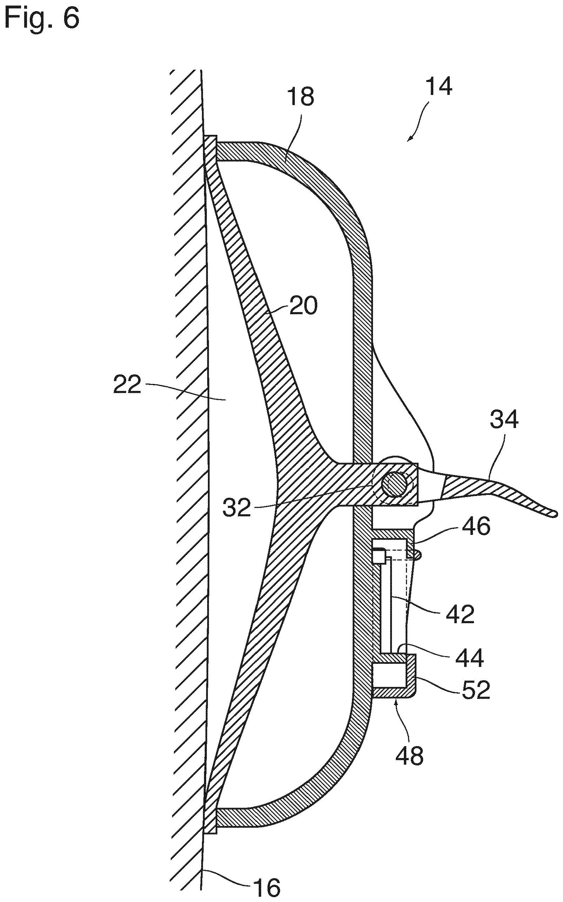

In Fig. 6 ist die Befestigungsvorrichtung 14 ohne den Befestigungsanker 12 und bei gelöster Saugglocke 18 gezeigt. Der Hebel 34 ist hier in eine Stellung geschwenkt, in der der Exzenter 32 den Zug auf die Saugglocke 20 lockert, so dass sich der Unterdruck in dem Hohlraum 22 entspannen kann.

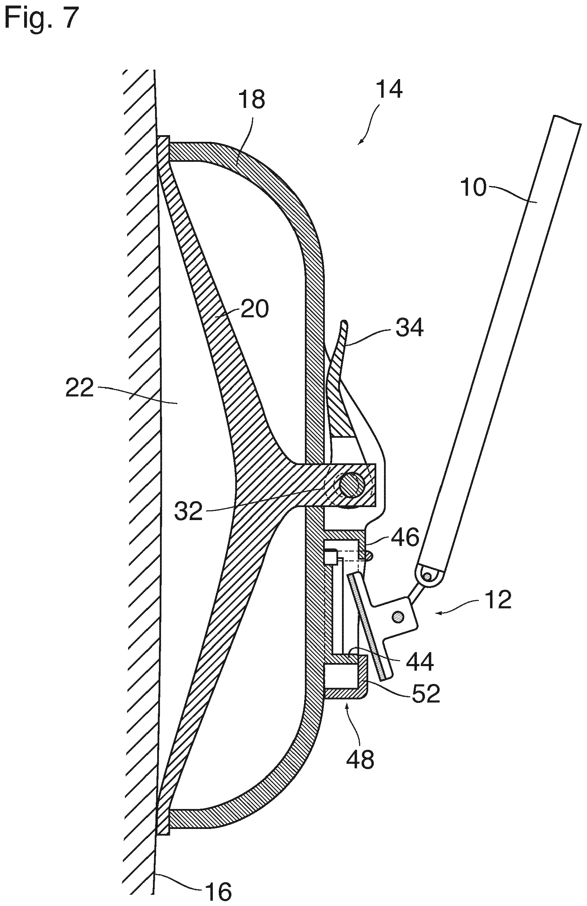

Der Riegel 48 ist hier in seine untere Endlage verschoben, so dass der Flansch 52 mit der unteren Wand des Sitzes 44 bündig ist. Der Abstand zwischen den Flanschen 52 und 46 wird dadurch so groß, dass die Basisplatte 36 des Befestigungsankers 12 in den Sitz 44 eingeführt und unter dem Flansch 46 eingehakt werden kann, wie in Fig. 7 gezeigt ist. Der Hebel 34 ist in Fig. 7 wieder in der Stellung gezeigt, in der die Saugglocke 18 fixiert ist.

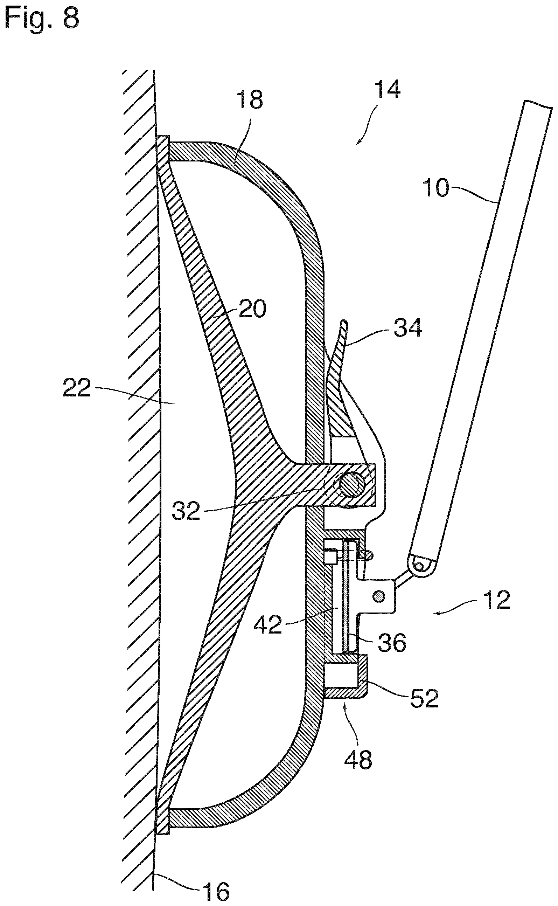

In Fig. 8 ist der Zustand gezeigt, in der die Basisplatte 36 ihre endgültige Lage in dem Halter 42 erreicht hat, der Riegel 48 sich jedoch noch in der Freigabestellung befindet. Durch Hochschieben des Riegels 48 in die Verriegelungsstellung wird dann wieder der in Fig. 1 gezeigte Zustand hergestellt.

Im folgenden werden Anwendungsbeispiele beschrieben, bei denen die Befestigungsvorrichtung 14 der oben beschriebenen Art zur Befestigung verschiedener Campingutensilien verwendet wird.

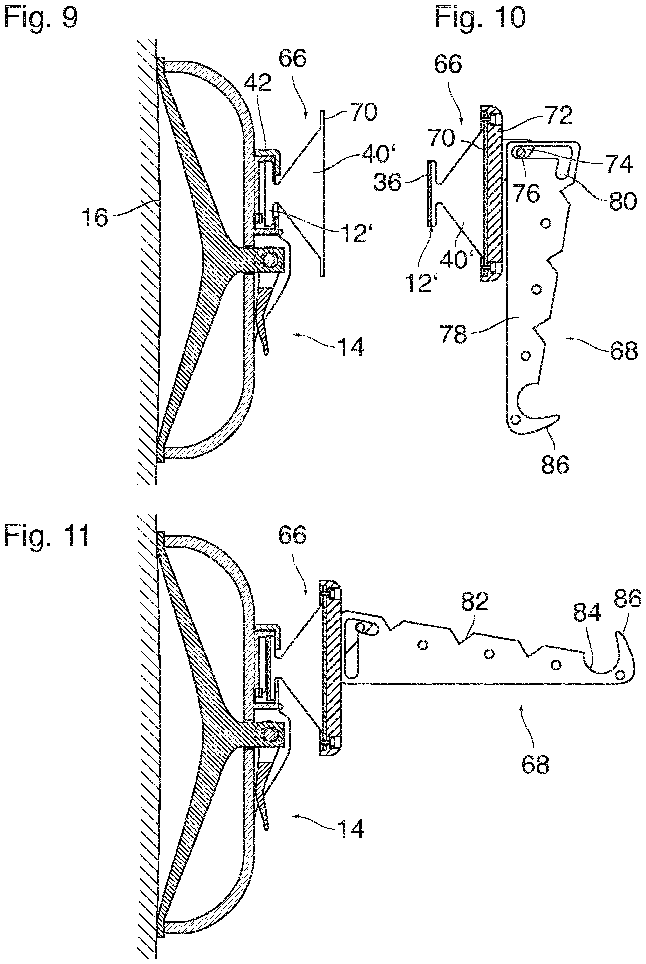

Figuren 9 bis 11 zeigen einen Bausatz bestehend aus der Befestigungsvorrichtung 14, einer Haltekonsole 66 und einem Kleiderhaken 68 (Figuren 10 und 11). An der Haltekonsole 66 ist ein Befestigungsanker 12' ausgebildet, der in den Teilen, die mit dem Halter 42 zusammenwirken, formidentisch mit dem Befestigungsanker 12 gemäß Figuren 1 bis 8 ist. Anstelle der Laschen 40 sind hier jedoch zwei parallele Wände 40' vorgesehen, die sich in der von dem Halter 42 weg weisenden Richtung trapezförmig erweitern und am freien Ende durch eine vertikale Halteplatte 70 miteinander verbunden sind. Die Halteplatte 70 erstreckt sich parallel zu der Basisplatte 36 des Befestigungsankers 12'.

Wie Fig. 10 zeigt, ist an die Halteplatte 70 ein Basisteil 72 des Kleiderhakens 68 angeschraubt. Das Basisteil 72 hat auf der dem Halter 66 zugewandten Seite eine an die Halteplatte 70 angepasste konkave Kontur, so dass sie sicher auf der Halteplatte 70 gehalten ist und diese zugleich verkleidet. Auf der entgegengesetzten Seite weist das Basisteil 72 zwei Lagerböcke 74 auf, die durch eine Achse 76 verbunden sind. Ein Hakenteil 78 des Kleiderhakens sitzt schwenkbar auf der Achse 76 und wird von den beiden Lagerböcken 74 so flankiert, dass er stabil in einer zu der Achse 76 rechtwinkligen Ebene geführt wird. Die Achse 76 durchgreift eine L-förmige Führungskulisse 80 des Hakenteils. Das erlaubt es, den Hakenteil 78 aus der in Fig. 10 gezeigten Position in die Position gemäß Fig. 11 zu schwenken, in der er rechtwinklig von der Wandfläche 16 absteht, an der die Befestigungsvorrichtung 14 angebracht ist. Die Kante des Hakenteils 78, die in Fig. 11 die Oberkante bildet, weist verschiedene Vertiefungen 82, 84 zum Einhängen von Kleiderbügeln auf. Die am äußersten Ende des Hakenteils gebildete Vertiefung 84 wird durch eine weiter vorspringende Nase 86 begrenzt, die auch dann zum Aufhängen eines Kleiderbügels oder irgendeines anderen Objekts genutzt werden kann, wenn der Hakenteil in die platzsparende Position gemäß Fig. 10 abgeklappt ist.

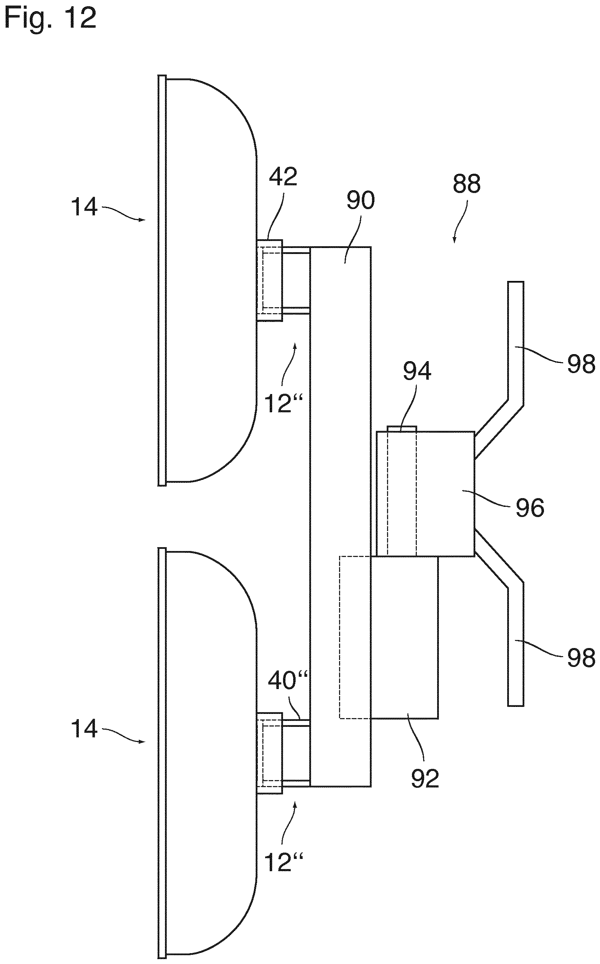

Fig. 12 zeigt einen Bausatz mit zwei baugleichen Befestigungsvorrichtungen 14 und einen Wandhalter 88 für ein Bildschirmgerät.

Der Wandhalter 88 weist zwei Befestigungsanker 12" auf, die an entgegengesetzten Enden einer hier vertikal verlaufenden Profilschiene 90 angebracht sind. Die beiden Befestigungsanker 12" unterscheiden sich von dem Befestigungsanker 12' nach Fig. 11 nur dadurch, dass ihre parallelen Wände 40", die den Laschen 40 nach Figuren 1 bis 8 bzw. den Wänden 40' in Fig. 11 entsprechen, hier durch die Profilschiene 90 miteinander und mit den Wänden 40" des jeweiligen anderen Befestigungsankers verbunden sind. Die Befestigungsvorrichtungen 14 sind in diesem Fall so an der hier nicht gezeigten Wandfläche angebracht, dass die Wände 40' waagerecht in der Richtung senkrecht zur Zeichenebene in Fig. 12 verlaufen. Dementsprechend sind auch die in Fig. 12 nicht näher gezeigten Riegel 48 der beiden Halter in der Richtung senkrecht zur Zeichenebene verschiebbar.

In der Profilschiene 90 ist - vorzugsweise höhenverstellbar - ein Gelenkunterteil 92 gehalten, das eine vertikale Gelenkachse 94 für ein Gelenkoberteil 96 bildet. Von dem Gelenkoberteil 96 gehen zwei Flügel 98 aus, deren freie Enden in einer gemeinsamen Ebene liegen und an denen ein nicht gezeigtes Bildschirmgerät, beispielsweise ein Flachbildschirm, befestigt werden kann. Der Flachbildschirm erstreckt sich dann etwa parallel zu der Wandfläche, kann jedoch in einem gewissen Winkelbereich um die Achse 94 verschwenkt werden. Das Gewicht des Flachbildschirms wird über die Flügel 98 in das Gelenkoberteil 96 und dann über das Gelenkunterteil 92 in die Profilschiene 90 und schließlich in die beiden an der Wandfläche angebrachten Befestigungsvorrichtungen 14 eingeleitet. Durch die Verwendung von zwei Befestigungsvorrichtungen können relativ große Gewichtskräfte aufgenommen werden.

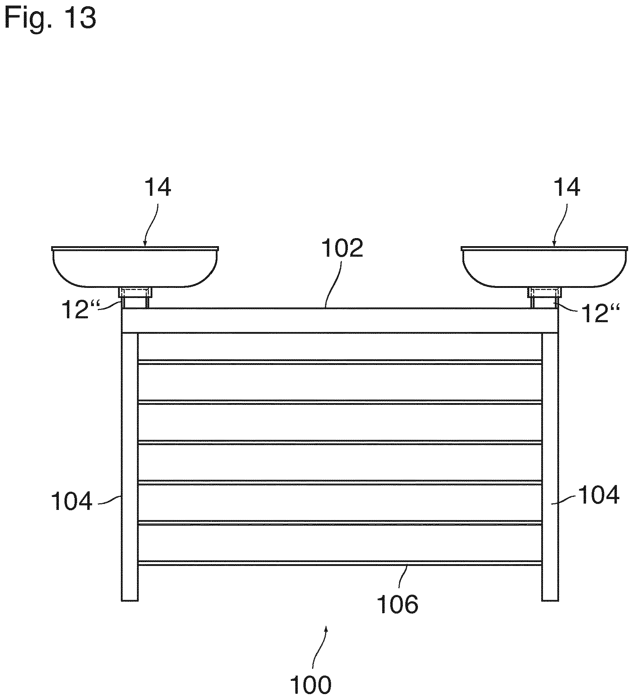

Fig. 13 zeigt einen Bausatz mit zwei Befestigungsvorrichtungen 14 und einen Wäschetrockner 100.

Der Wäschetrockner 100 ist in Fig. 13 in der Draufsicht gezeigt und weist eine waagerechte Basisschiene 102 auf, an deren Enden die gleichen Befestigungsanker 12" angebracht sind wie bei dem Bausatz nach Fig. 12. Von der Seite der Basisschiene 102, die den Befestigungsankern 12" entgegengesetzt ist, gehen zwei Ausleger 104 aus, zwischen denen mehrere parallele Aufhängestangen 106 für Wäsche verlaufen. Die Aufhängestangen 106 sind mit ihren Enden vorzugsweise verschiebbar in den Auslegern 104 geführt, so dass sie platzsparend zusammengeschoben werden können, wenn sie nicht gebraucht werden. Vorzugsweise sind auch die Ausleger 104 aus der in Fig. 13 gezeigten horizontalen Position in eine vertikale Position abklappbar, ähnlich wie der Kleiderhaken gemäß Figuren 9 bis 11.

Die Befestigungsvorrichtungen 14 und die Befestigungsanker 12, 12' und 12" sind alle miteinander kompatibel, so dass die hier gezeigten Bausätze und auch die Markisenhalterung gemäß Figuren 1 bis 8 zusammen ein Set bilden, in dem die Befestigungsvorrichtungen 14 gegeneinander ausgetauscht und je nach Bedarf für unterschiedliche Verwendungszwecke eingesetzt werden können.

## Patentansprüche

1. Vorrichtung zur lösbaren Fixierung eines Befestigungsankers (12) an einer glatten Wandfläche (16), mit einer Saugglocke (18), die dazu ausgebildet ist, durch Unterdruck an der Wandfläche (16) gehalten zu werden und die einen Halter (42) für den Befestigungsanker (12) bildet, wobei die Saugglocke (18) zwei Stege (30) aufweist, zwischen denen ein Hebel (34) zum Spannen eines Saugnapfes (20) gelagert ist, und der Halter (42) einen Sitz (44) aufweist, der dazu konfiguriert ist, eine Basisplatte (36) des Befestigungsankers (12) an ihrem Rand allseitig zu umschließen, und ein beweglich an dem Halter (42) angeordneter Riegel (48) zwischen einer Freigabestellung, in der er das Einsetzen der Basisplatte (36) in den Sitz (44) erlaubt, und einer Verriegelungsstellung bewegbar ist, in der er die Basisplatte (36) übergreift, **dadurch gekennzeichnet, dass** der Halter (42) in einem Stück mit der Saugglocke (18) ausgebildet ist und dass Teile (44a) des Sitzes (44) durch Verlängerungen der Stege (30) gebildet werden.

2. Vorrichtung nach Anspruch 1, bei der die Saugglocke (18) und der Halter (42) durch ein Spritzteil aus Kunststoff gebildet werden.

3. Vorrichtung nach einem der vorstehenden Ansprüche, bei der der Riegel (48) verschiebbar an dem Halter (42) geführt ist.

4. Vorrichtung nach einem der vorstehenden Ansprüche, bei der an dem Sitz (44) ein Flansch (46) gebildet ist unter welchem ein Rand der Basisplatte (36) einhakbar ist.

5. Bausatz mit einer Vorrichtung (14) nach einem der Ansprüche 1 bis 4 und einer Haltekonsole (66), die einen in den Halter (42) passenden Befestigungsanker (12') bildet.

6. Bausatz nach Anspruch 5, bei dem die Haltekonsole (66) eine Halteplatte (70) aufweist, die sich parallel und in Abstand zu der Basisplatte (36) des Befestigungsankers (12') erstreckt.

7. Bausatz nach Anspruch 6, mit einem an der Halteplatte (70) zu befestigenden Kleiderhaken (68).

8. Bausatz nach Anspruch 7, bei dem der Kleiderhaken (68) ein an der Halteplatte (70) zu befestigendes Basisteil (72) und einen Hakenteil (68) aufweist, der derart schwenkbar an dem Basisteil gehalten ist, dass er aus einer von der Wandfläche (16) vorspringenden Position in eine im wesentlichen parallel zu der Wandfläche verlaufende Position abklappbar ist.

9. Bausatz mit mindestens zwei Vorrichtungen (14), die jeweils nach einem der Ansprüche 1 bis 4 ausgebildet sind, und einem daran zu fixierenden Bauteil (88, 100), das eine Schiene (90; 102) mit zwei Befestigungsankern (12") aufweist, die in die Halter (42) der Vorrichtungen (14) passen.

10. Bausatz nach Anspruch 9, bei dem das Bauteil (88) ein Gerätehalter ist.

11. Bausatz nach Anspruch 9, bei dem das Bauteil (100) ein Wäschetrockner ist.

12. Bausatz mit mehreren Vorrichtungen (14), die jeweils nach einem der Ansprüche 1 bis 4 ausgebildet sind, und mehreren an den Vorrichtungen (14) zu befestigenden Bauteilen (10; 66; 88; 100), die jeweils mindestens einen Befestigungsanker (12; 12'; 12") aufweisen, bei welchem Bausatz alle Vorrichtungen (14) und alle Befestigungsanker (12; 12'; 12") miteinander kompatibel sind.

## Claims

1. A device for detachably mounting a fastening anchor (12) on a smooth wall surface (16), the device comprising a suction bell (18) configured for being held on the wall surface (16) by vacuum pressure and constituting a holder (42) for the fastening anchor (12), wherein the suction bell (18) has two webs (30) between which a lever (34) for biasing a suction cup (20) is supported, and the holder (42) has a seat (44) that is configured for enclosing a base plate (36) of the fastening anchor (12) at its edge on all sides, and latch (48) that is movably mounted on the holder (42) and is movable between a release position in which it permits the base plate (36) to be inserted into the seat (44), and a latch position in which it straddles the base plate (36), **characterized in that** the holder (42) is formed in one piece with the suction bell (18) and **in that** parts (44a) of the seat (44) are formed by extensions of the webs (30).

2. The device according to claim 1, wherein the suction bell (18) and the holder (42) are formed by an injection molded plastic piece.

3. The device according to any of the preceding claims, wherein the latch (48) is slidably guided on the holder (42).

4. The device according to any of the preceding claims, wherein the seat (44) is formed with a flange (46) under which an edge of the base plate (36) can be hooked-in.

5. A kit comprising a device (14) according to any of the claims 1 to 4 and a holding bracket (66) forming a fastening anchor (12') that fits into the holder (42).

6. The kit according to claim 5, wherein the holding bracket (66) has a holding plate (70) that extends in parallel with and is spaced apart from the base plate (36) of the fastening anchor (12').

7. The kit according to claim 6, comprising a clothing hook (68) to be attached to the holding plate (70).

8. The kit according to claim 7, wherein the clothing hook (68) has a base part (72) to be attached to the holding plate (70) and a hook part (68) that is pivotably held on the base part, such that it can be hinged down from a position in which it projects from the wall surface (16) into a position essentially in parallel with the wall surface.

9. A kit comprising at least two devices (14) each of which is configured in accordance with one of the claims 1 to 4, the kit further comprising a construction member (88, 100) that has a rail (90; 102) with two fastening anchors (12") that fit into the holders (42) of said devices.

10. The kit according to claim 9, wherein the construction member (88) is a holder for apparatus.

11. The kit according to claim 9, wherein the construction member (100) is a laundry dryer.

12. A kit comprising a plurality of devices (14) each of which is configured in accordance with one of the claims 1 to 4, the kit comprising a plurality of construction members (10, 66; 68; 100) to be attached to said devices (14), each of said construction members having a fastening anchor (12; 12'; 12"), wherein all devices (14) and all fastening anchors (12; 12'; 12") in the kit are compatible with one another.

## Revendications

1. Dispositif permettant de fixer de manière amovible un ancrage de fixation (12) à une surface de paroi plane (16), ayant une ventouse (18) conçue pour être maintenue sur la surface de paroi (16) en créant une dépression et formant un support (42) pour l'ancrage de fixation (12), dans lequel la ventouse (18) comporte deux nervures (30) entre lesquelles est monté un levier (34) pour le serrage d'une coupelle (20) et le support (42) comporte un siège (44) qui est configuré pour entourer de tous côtés, au niveau de son bord, une plaque de base (36) de l'ancrage de fixation (12), et un verrou (48) agencé de manière mobile sur le support (42) qui peut se déplacer entre une position de libération, dans laquelle il permet la mise en place de la plaque de base (36) dans le siège (44), et une position de verrouillage dans laquelle il recouvre la plaque de base (36), **caractérisé en ce que** le support (42) est formé d'un seul tenant avec la ventouse (18) et **en ce que** des parties (44a) du siège (44) sont formées par des extensions des nervures (30).

2. Dispositif selon la revendication 1, dans lequel la ventouse (18) et le support (42) sont formés par une pièce en matière plastique moulée par injection.

3. Dispositif selon l'une des revendications précédentes, dans lequel le verrou (48) est guidé sur le support (42) de manière mobile.

4. Dispositif selon l'une des revendications précédentes, dans lequel un rebord (46) est formé sur le siège (44), rebord sous lequel un bord de la plaque de base (36) peut être accroché.

5. Ensemble ayant un dispositif (14) selon l'une des revendications 1 à 4 et une console de support (66) qui forme un ancrage de fixation (12') adapté dans le support (42) .

6. Ensemble selon la revendication 5, dans lequel la console de support (66) comporte une plaque de support (70) qui s'étend parallèlement à la plaque de base (36) de l'ancrage de fixation (12') et à distance de celle-ci.

7. Ensemble selon la revendication 6, ayant un crochet pour vêtement (68) à fixer à la plaque de support (70).

8. Ensemble selon la revendication 7, dans lequel le crochet pour vêtement (68) comporte une pièce de base (72) à fixer sur la plaque de support (70) et une pièce de crochet (68) qui est maintenue sur la pièce de base de manière à pouvoir pivoter, de sorte qu'elle peut être rabattue à partir d'une position en saillie à partir de la surface de paroi (16) jusqu'à une position s'étendant de manière sensiblement parallèle à la surface de paroi.

9. Ensemble ayant au moins deux dispositifs (14) qui sont respectivement formés selon l'une des revendications 1 à 4, et un composant (88, 100) à fixer à ceux-ci qui comporte un rail (90 ; 102) avec deux ancrages de fixation (12") qui s'adaptent dans les supports (42) des dispositifs (14).

10. Ensemble selon la revendication 9, dans lequel le composant (88) est un support d'appareil.

11. Ensemble selon la revendication 9, dans lequel le composant (100) est un séchoir à linge.

12. Ensemble ayant plusieurs dispositifs (14) qui sont respectivement formés selon l'une des revendications 1 à 4, et plusieurs composants (10 ; 66 ; 88 ; 100) à fixer sur les dispositifs (14), qui comportent respectivement au moins un ancrage de fixation (12 ; 12' ; 12"), ensemble dans lesquels tous les dispositifs (14) et tous les ancrages de fixation (12; 12'; 12") sont compatibles les uns avec les autres.
